# FASCICULE DE BREVET EUROPEEN

(11) **EP 3 248 738 B1**
(45) Date de publication et mention de la délivrance du brevet: **16.11.2022**
(21) Numéro de dépôt: 17168436.8
(22) Date de dépôt: 27.04.2017
(51) Int. Cl.: B25J 15/00, B25J 15/06, B25J 15/12

(54) **DISPOSITIF DE PRÉHENSION À MEMBRANE ET VENTOUSE**
GREIFVORRICHTUNG MIT MEMBRAN UND SAUGNAPF
GRIPPING DEVICE WITH MEMBRANE AND SUCTION CUP

(30) Priorité: 26.05.2016 FR 1654739
(43) Date de publication de la demande: 29.11.2017
(73) Titulaire: PSA Automobiles SA, 78300 Poissy (FR)
(72) Inventeur: GELIN, Frédéric, 35131 Pont Pean (FR); MALOTAUX, Luc, 35160 Montfort sur Meu (FR)
(74) Mandataire: Fernandez, Francis Lionel

(56) Documents cités:
- WO-A1-2010/088925
- DE-A1-102012 003 094
- DE-A1-102012 215 797
- JP-A- 2012 176 476

## Description

L'invention a trait au domaine de la préhension d'objets en vue de leur manutention.

Le document de brevet publié WO 2011/130475 A2 divulgue un dispositif de préhension d'objets, comprenant un support et une membrane déformable généralement sphérique, attachée au support et formant une enceinte fermée. Cette enceinte est remplie d'un matériau granuleux, et un fluide, tel que de l'air, peut être injecté dans l'enceinte ou en être expulsé. L'injection d'air permet au matériau granuleux de se décompacter et de passer ainsi d'une phase assimilable à une phase solide à une phase assimilable à une phase liquide. Lorsque la face inférieure de la membrane est mise en contact avec un objet, a priori d'une forme quelconque, et que de l'air est injecté dans l'enceinte, la membrane se déforme pour épouser au moins partiellement l'objet. Lorsque de l'air est ensuite expulsé de l'enceinte, le matériau granuleux redevient compact et solidifie la forme de la membrane épousant l'objet. Ce dernier est alors en prise avec la membrane déformée et peut alors être déplacé.

Un tel dispositif de préhension est par ailleurs commercialisé par la société EMPIRE ROBOTICS sous le nom de VERSABALL^{®}.

Un tel dispositif est particulièrement adapté à la préhension d'objets dont au moins une des dimensions dans le plan sur lequel il repose est inférieure au diamètre de la membrane sphérique. Pour obtenir une préhension, il est en effet nécessaire que la membrane se déforme au point d'entrer en contact avec des parois latérales opposées de l'objet. Ce dispositif n'est par conséquent pas adapté à la préhension d'objets plus grands tels que des objets plats.

Le document DE102012003094 A1 décrit un dispositif de préhension par membrane déformable comportant des moyens d'aspiration à une face opposée au support de ladite membrane.

Le document WO2010088925 A1 décrit un dispositif de préhension comporte un coussin aspirant dont la surface à l'opposé du support du coussin aspirant est munie de trous pour le passage de l'air, chaque trou comportant une coupelle d'aspiration communiquant avec l'intérieur du coussin aspirant et est muni de moyens d'ouverture et fermeture de l'air actionnables pour ouvrir et fermer la coupelle d'aspiration.

Le document DE102012215797) décrit un dispositif de préhension comportant une enceinte déformable traversée de canaux débouchant sur une face de l'enceinte opposée au support de ladite enceinte, chaque canal étant terminé par une pince aspirante.

Le document JP2012176476 décrit un dispositif de préhension présentant une enceinte sous forme d'une couronne, c'est-à-dire de forme annulaire, autour d'un conduit d'aspiration.

L'invention a pour objectif de pallier au moins un des inconvénients de l'état de la technique susmentionné.

Plus particulièrement, l'invention a pour objectif de proposer un dispositif de préhension davantage polyvalent.

L'invention a pour objet un dispositif de préhension d'objets, comprenant :
- un support avec au moins un passage pour un fluide ;
- une membrane attachée au support et formant une enceinte déformable et fermée en communication avec le ou les passages ;
   - un matériau granuleux dans l'enceinte formée par la membrane, du fluide pouvant être injecté et expulsé de l'enceinte par le ou les passages ;
- une ventouse attachée à la membrane apte à la préhension d'un objet plat,
- la ventouse étant à l'opposé du support,
la membrane étant configurée pour permettre, par sa déformation, à la ventouse en contact avec un des objets de s'orienter suivant ledit objet, le matériau granuleux étant tel que l'injection de fluide dans l'enceinte via le ou les passages permet de faire passer ledit matériau d'une phase solide à une phase meuble, et l'expulsion de fluide de ladite enceinte permet de faire passer ledit matériau de la phase meuble à la phase solide, le dispositif étant remarquable en ce que
- la membrane est sphérique,
- la ventouse est disposée à l'opposé du support suivant un axe longitudinal de sorte à laisser disponible la surface extérieure de la membrane restante entre ladite ventouse et ledit support pour procéder à des préhensions d'objets par déformation de la membrane en question.

L'enceinte est avantageusement remplie à plus de 80%, préférentiellement plus de 90%, de sa capacité par le matériau granuleux.

Le matériau granuleux présente avantageusement un taux d'humidité inférieur à 20%, préférentiellement inférieur à 15%, plus préférentiellement inférieur à 10%.

Le fluide qui est injecté dans et/ou expulsé de l'enceinte peut être un gaz, préférentiellement de l'air.

Selon un mode avantageux de l'invention, la ventouse comprend un raccord destiné à être raccordé à une source de vide.

Selon un mode avantageux de l'invention, la base comprend un raccord destiné à être raccordé à une source d'injection et/ou d'évacuation de fluide.

Selon un mode avantageux de l'invention, la base comprend des moyens de fixation, notamment à un bras d'un robot.

L'invention a également pour objet un robot de manipulation d'objets, comprenant un bras articulé et un dispositif de préhension desdits objets fixé audit bras ; remarquable en ce que le dispositif de préhension est conforme à l'invention.

L'invention a également pour objet un procédé de manipulation d'objets au moyen d'un robot avec un bras articulé et un dispositif de préhension desdits objets fixé audit bras, comprenant les étapes suivantes : approche du dispositif de préhension vers un des objets et contact avec ledit objet ; préhension de l'objet avec le dispositif de préhension ; déplacement du dispositif de préhension et de l'objet ; relâchement de l'objet par le dispositif de préhension ; remarquable en ce que le robot est conforme à l'invention ; l'étape d'approche vers, et de contact avec, l'objet comprend l'injection de fluide dans l'enceinte formée par la membrane en vue rendre la membrane déformable ; et l'étape de préhension de l'objet comprend l'expulsion du fluide de l'enceinte en vue de rendre la membrane rigide.

Selon un mode avantageux de l'invention, l'étape d'approche vers, et de contact avec, l'objet comprend un contact entre la ventouse et l'objet, ledit objet présentant une surface générale plate d'une étendue supérieure à celle de la ventouse ; et l'étape de préhension de l'objet comprend, en outre, la formation de vide entre la ventouse et l'objet.

Les mesures de l'invention sont intéressantes en ce qu'elles procurent un dispositif de préhension pouvant saisir des objets plats et étendus ainsi que des objets de plus petite dimension. De plus, la présence de la membrane entre la base et la ventouse permet à la ventouse de changer d'orientation au contact d'un objet, ce changement d'orientation pouvant être maintenu ou non par le contrôle de fluide dans l'enceinte.

D'autres caractéristiques et avantages de la présente invention seront mieux compris à l'aide de la description et des dessins parmi lesquels :
- La figure 1 est une vue de face d'un dispositif de préhension conforme à l'invention ;
- La figure 2 illustre une première utilisation possible du dispositif de préhension de la figure 1 ;
- La figure 3 illustre une deuxième utilisation possible du dispositif de préhension de la figure 1 ;
- La figure 4 illustre une troisième utilisation possible du dispositif de préhension de la figure 1.

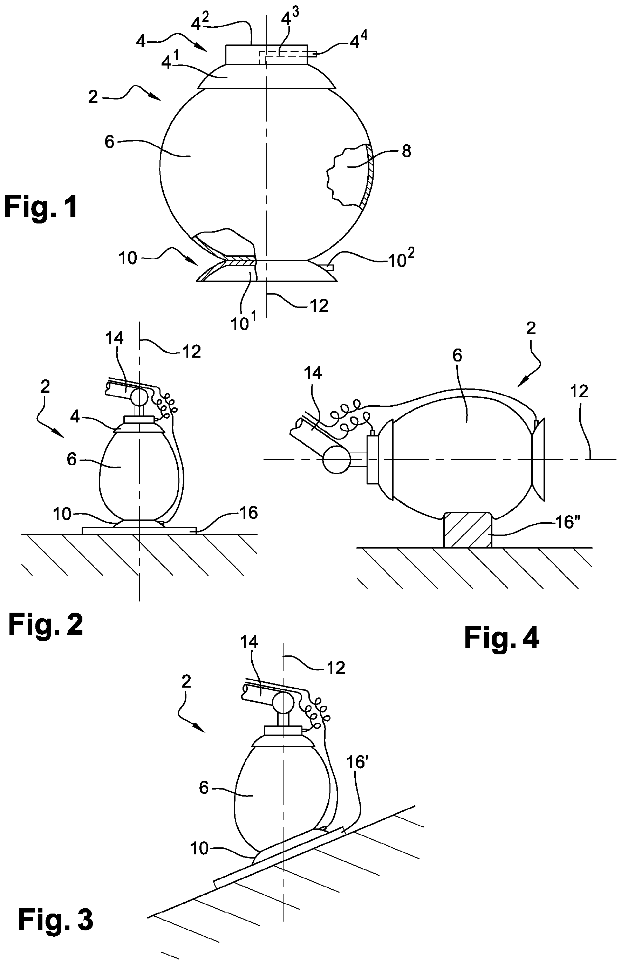

La figure 1 est une représentation d'un dispositif de préhension d'objets, conforme à l'invention. Le dispositif 2 comprend un support 4 avec une collerette 4¹ avantageusement évasée destinée à être fixée de manière étanche à une membrane déformable 6 formant une enceinte. La membrane déformable est avantageusement de forme sphérique. Le support 4 peut également comprendre, à l'opposé de la collerette 4¹, des moyens de fixation 4² notamment à un bras de robot. La base 4 comprend également un passage 4³ reliant de manière fluidique l'enceinte avec un raccord 4⁴ destiné à être raccordé à une source de fluide, par exemple de l'air, apte à, au choix, injecter le fluide dans l'enceinte ou expulser ledit fluide de ladite enceinte. La base 4 est en matériau rigide comme notamment du métal, du plastique ou du matériau composite.

L'enceinte délimitée par la membrane déformable 6 contient un matériau granuleux 8, tel que du sable, apte à se compacter et se décompacter en fonction de la présence du fluide dans l'enceinte. En l'absence de ce fluide, ou du moins en présence d'une quantité minimale de ce fluide, typiquement de l'air, le matériau 8 se compacter et présente un état assimilable à un état solide. Lorsque le fluide est injecté dans l'enceinte via le raccord 4⁴ et le passage 4³, le matériau 8 se décompacte et passe à un état assimilable à un état liquide ou du moins meuble.

Le dispositif 2 comprend également une ventouse 10 disposé sur la membrane déformable 6. Avantageusement, la ventouse 10 est disposée à l'opposé de la base 4 suivant l'axe longitudinal 12. La ventouse 10 peut être fixée à la membrane 8, notamment par collage et/ou vulcanisation. Elle peut également être intégralement formée avec la membrane. La ventouse 10 peut comprendre une portion principale 10¹ en forme d'assiette et un raccord 10² situé sur le côté et destiné à être raccordé à une source de vide. La ventouse peut être circulaire, ovale ou de tout autre forme.

Le dispositif de préhension 2 présente ainsi une partie déformable, correspondant à la membrane 6, apte à permettre à la ventouse de se conformer à des objets dont la surface n'est pas initialement parallèle à la ventouse. La surface extérieure de la membrane 6 restante, c'est-à-dire la surface s'étendant autour de l'axe longitudinal 12 entre la base 4 et la ventouse 10 reste disponible pour procéder à des préhensions d'objets par déformation de la membrane en question.

Les figures 2 à 4 illustrent différentes utilisations possibles du dispositif de préhension de la figure 1.

A la figure 2, le dispositif de préhension 2 est fixé, via la base 4, à un bras articulé 14 de robot. L'enceinte formée par la membrane 6 est raccordée par un ou plusieurs conduits à une source d'injection et d'expulsion de fluide. La ventouse et raccordée par une conduite à une source de vide. Le dispositif 2 est rapproché d'un objet 16 généralement plat et disposé sur une surface généralement perpendiculaire à l'axe longitudinal du dispositif. La ventouse 10 est amenée en contact avec l'objet et un vide est réalisé dans l'espace essentiellement fermé entre la ventouse 10 et l'objet 16. La paroi latérale de la ventouse peut se déformer et l'objet est alors plaqué contre la ventouse, assurant ainsi sa préhension. L'enceinte formée par la membrane peut rester sans injection de fluide, afin de rester dans un état essentiellement solide.

A la figure 3, la surface supérieure de l'objet 16' n'est plus parallèle à la ventouse lorsque celle-ci est en phase d'approche (non représentée). Du fluide est avantageusement injecté dans l'enceinte formée par la membrane 6 de manière à la rendre souple et déformable. Lors du mouvement d'approche du dispositif de préhension 2 vers l'objet 16', la ventouse 10 contacte l'objet de manière inégale et la membrane 6 peut se déformer pour que la ventouse épouse l'objet, comme cela est visible à la figure 3. Avant de déplacer l'objet 16', du fluide peut être expulsé de l'enceinte de la membrane 6 de manière à la rigidifier. Cela signifie alors que la ventouse 10 reste inclinée par rapport à la perpendiculaire à l'axe longitudinal 12. En l'absence d'évacuation du fluide, la ventouse pourra reprendre son orientation initiale, c'est-à-dire essentiellement perpendiculaire à l'axe longitudinal 12.

A la figure 4, le dispositif de préhension 2 est basculé à 90° de manière à amener son axe longitudinal 12 essentiellement parallèle à la surface sur laquelle est disposé l'objet 16". Ce dernier n'est plus un objet plat et étendu mais plutôt un objet compact, ou du moins dont au moins une des dimensions dans un plan parallèle à la surface sur laquelle il est disposé est inférieure au diamètre de la membrane 6. Lorsque le dispositif de préhension est rapproché de l'objet 16", du fluide est injecté dans l'enceinte de la membrane 6 afin de rendre ladite membrane déformable. Elle peut alors épouser la surface supérieure et les surfaces latérales de l'objet. Le fluide est ensuite expulsé de l'enceinte afin que le matériau granuleux colmate à nouveau et rigidifie la membrane 6. L'objet 16" est alors en prise avec le dispositif de préhension 2 et peut être déplacé.

## Revendications

1. Dispositif de préhension (2) d'objets (16, 16', 16"), comprenant :
- un support (4) avec au moins un passage (4³, 4⁴) pour un fluide ;
- une membrane (6) attachée au support (4) et formant une enceinte déformable et fermée en communication avec le ou les passages (4³, 4⁴) ;
un matériau granuleux (8) dans l'enceinte formée par la membrane (6), du fluide pouvant être injecté et expulsé de l'enceinte par le ou les passages (4³, 4⁴) ;
- une ventouse (10) attachée à la membrane (6) apte à la préhension d'un objet plat (16, 16'),
- la ventouse (10) étant à l'opposé du support (4),
la membrane (6) étant configurée pour permettre, par sa déformation, à la ventouse (10) en contact avec un des objets (16') de s'orienter suivant ledit objet, le matériau granuleux (8) étant tel que l'injection de fluide dans l'enceinte via le ou les passages (4³, 4⁴) permet de faire passer ledit matériau (8) d'une phase solide à une phase meuble, et l'expulsion de fluide de ladite enceinte permet de faire passer ledit matériau de la phase meuble à la phase solide,
le dispositif étant **caractérisé en ce que**
- la membrane (6) est sphérique,
- la ventouse (10) est disposée à l'opposé du support (4) suivant un axe longitudinal (12) de sorte à laisser disponible la surface extérieure de la membrane (6) restante entre ladite ventouse (10) et ledit support (4) pour procéder à des préhensions d'objets par déformation de la membrane en question.

2. Dispositif (2) selon la revendication 1, **caractérisé en ce que** la ventouse (10) comprend un raccord (10²) destiné à être raccordé à une source de vide.

3. Dispositif (2) selon l'une des revendications 1 à 2, **caractérisé en ce que** le support (4) comprend un raccord (4⁴) destiné à être raccordé à une source d'injection et/ou d'évacuation de fluide.

4. Dispositif (2) selon l'une des revendications 1 à 3, **caractérisé en ce que** le support (4) comprend des moyens de fixation (4²), notamment à un bras (14) d'un robot.

5. Robot de manipulation d'objets (16, 16', 16"), comprenant un bras articulé (14) et un dispositif de préhension (2) desdits objets fixé audit bras ; **caractérisé en ce que** le dispositif de préhension (2) est conforme à l'une des revendications 1 à 4.

6. Procédé de manipulation d'objets (16, 16', 16") au moyen d'un robot avec un bras articulé (14) et un dispositif de préhension (2) desdits objets fixé audit bras (14), comprenant les étapes suivantes :
- approche du dispositif de préhension (2) vers un des objets (16, 16', 16") et contact avec ledit objet ;
- préhension de l'objet (16, 16', 16") avec le dispositif de préhension (2) ;
- déplacement du dispositif de préhension (2) et de l'objet (16, 16', 16") ;
- relâchement de l'objet (16, 16', 16") par le dispositif de préhension (2) ;
**caractérisé en ce que**
le robot est conforme à la revendication 5;
l'étape d'approche vers, et de contact avec, l'objet (16, 16', 16") comprend l'injection de fluide dans l'enceinte formée par la membrane (6) en vue rendre la membrane déformable ; et
l'étape de préhension de l'objet (16, 16', 16") comprend l'expulsion du fluide de l'enceinte en vue de rendre la membrane rigide (6).

7. Procédé selon la revendication 6, **caractérisé en ce que** l'étape d'approche vers, et de contact avec, l'objet (16, 16") comprend un contact entre la ventouse (10) et l'objet (16, 16'), ledit objet présentant une surface générale plate d'une étendue supérieure à celle de la ventouse (10) ; et
l'étape de préhension de l'objet comprend, en outre, la formation de vide entre la ventouse (10) et l'objet (16, 16').

## Patentansprüche

1. Greifvorrichtung (2) für Gegenstände (16, 16', 16"), bestehend aus:
- einen Träger (4) mit mindestens einem Durchgang (4³, 4⁴) für ein Fluid;
- eine an dem Träger (4) befestigte Membran (6), die eine verformbare und in Verbindung mit dem oder den Durchlässen (4³, 4⁴) geschlossene Kammer bildet;
ein körniges Material (8) in dem durch die Membran (6) gebildeten Raum, wobei durch den oder die Durchlässe (4³, 4⁴) Fluid injizierbar und aus dem Raum ausgestoßen werden kann;
- einem an der Membran (6) befestigten Saugnapf (10) zum Greifen eines flachen Gegenstandes (16, 16'),
- der Saugnapf (10) dem Träger (4) gegenüberliegt,
Die Membran (6) ist so ausgebildet, dass sie durch Verformung dem mit einem der Gegenstände (16') in Kontakt stehenden Saugnapf (10) eine Orientierung entlang dieses Gegenstands ermöglicht, wobei das körnige Material (8) so beschaffen ist, dass durch das Einspritzen von Fluid durch den oder die Durchlässe (4³, 4⁴) das Material (8) von einer festen in eine bewegliche Phase überführt, und Ausstoßen von Flüssigkeit aus dem Behälter ermöglicht den Durchtritt des Materials aus der beweglichen Phase in die feste Phase;
die Vorrichtung **dadurch gekennzeichnet ist, dass**
- die Membran (6) ist sphärisch;
- der Saugnapf (10) ist gegenüber dem Träger (4) entlang einer Längsachse (12) angeordnet, sodass die Außenfläche der verbleibenden Membran (6) zwischen dem Saugnapf (10) und dem Träger (4) zur Herstellung von Gegenstandsangriffen durch Verformung der betreffenden Membran verfügbar bleibt.

2. Vorrichtung (2) nach Anspruch 1, **dadurch gekennzeichnet, dass** der Saugnapf (10) einen Anschluss (10²) zum Anschluss an eine Vakuumquelle aufweist.

3. Vorrichtung (2) nach einem der Ansprüche 1 bis 2, **dadurch gekennzeichnet, dass** der Träger (4) einen Anschluss (4⁴) zum Anschluss an eine Fluidinjektions- und/oder -abfuhrquelle aufweist.

4. Vorrichtung (2) nach einem der Ansprüche 1 bis 3, **dadurch gekennzeichnet, dass** der Träger (4) Befestigungsmittel (4²) aufweist, insbesondere an einem Arm (14) eines Roboters.

5. Roboter zur Handhabung von Gegenständen (16, 16', 16"), der einen Gelenkarm (14) und eine an dem Arm befestigte Greifvorrichtung (2) für diese Gegenstände umfasst; Greifvorrichtung (2) nach einem der Ansprüche 1 bis 4.

6. Verfahren zum Handhaben von Gegenständen (16, 16', 16") mittels eines Roboters mit einem Gelenkarm (14) und einer an dem Arm (14) befestigten Greifvorrichtung (2) für diese Gegenstände, das folgende Schritte umfasst:
- Annäherung der Greifvorrichtung (2) an eines der Gegenstände (16, 16', 16") und Kontakt mit diesem Gegenstand;
- Greifen des Gegenstandes (16, 16', 16") mit der Greifvorrichtung (2);
- Bewegung der Greifvorrichtung (2) und des Gegenstandes (16, 16', 16");
- Lösen des Gegenstands (16, 16', 16") durch die Greifvorrichtung (2);
**dadurch gekennzeichnet, dass**
Der Roboter entspricht Anspruch 5.
Der Schritt des Heranführens an und des Kontakts mit dem Gegenstand (16, 16', 16") umfasst das Einspritzen von Fluid in das durch die Membran (6) gebildete Gehäuse, um die Membran verformbar zu machen; und
Der Schritt des Greifens des Gegenstandes (16, 16', 16") umfasst das Ausstoßen des Fluids aus dem Gehäuse, um die Membran (6) starr zu machen.

7. Verfahren nach Anspruch 6, **dadurch gekennzeichnet, dass** der Schritt des Heranführens und Kontaktens mit dem Gegenstand (16, 16") einen Kontakt zwischen dem Saugnapf (10) und dem Gegenstand (16, 16') umfasst, wobei der Gegenstand eine im Wesentlichen flache Oberfläche mit einer größeren Ausdehnung als der Saugnapf (10) aufweist; und
Der Schritt des Greifens des Gegenstandes umfasst ferner die Vakuumbildung zwischen dem Saugnapf (10) und dem Gegenstand (16, 16').

## Claims

1. Device for gripping (2) objects (16, 16', 16'), including:
- a support (4) with at least one passage (4³, 4⁴) for a fluid;
- a membrane (6) attached to the support (4) and forming a deformable and closed enclosure in communication with the passage(s) (4³, 4⁴);
a granular material (8) in the chamber formed by the membrane (6), fluid that can be injected and expelled from the chamber by the passage(s) (4³, 4⁴);
- a suction cup (10) attached to the membrane (6) suitable for grasping a flat object (16:16'),
- the suction cup (10) being opposite the support (4),
the membrane (6) is configured to allow, by its deformation, the suction (10) in contact with one of the objects (16') to orient itself according to that object, the granular material (8) being such that the injection of fluid into the enclosure through the passage(s) (4³, 4⁴) allows the material (8) to move from a solid phase to a loose phase, and fluid removal from the said enclosure allows the material to be transferred from the furniture phase to the solid phase,
the device being **characterized in that**
- the membrane (6) is spherical,
- the suction cup (10) is positioned opposite the support (4) along a longitudinal axis (12) so that the outer surface of the remaining membrane (6) is available between the said suction cup (10) and the said support (4) for the purpose of striking objects by deformation of the membrane in question.

2. Device (2) according to Claim 1, characterized that the suction cup (10) includes a fitting (10²) intended to be connected to a vacuum source.

3. Device (2) according to one of the claims 1 to 2, characterized as the support (4) includes a fitting (4⁴) intended to be connected to a fluid injection and/or discharge source.

4. Device (2) according to one of the claims 1 to 3, characterized as the support (4) includes means of attachment (4²), including one arm (14) of a robot.

5. Object handling robot (16, 16', 16"), including an articulated arm (14) and a grasping device (2) for the said objects attached to that arm; (2) is consistent with one of the claims 1 to 4.

6. Process of manipulating objects (16, 16', 16') by means of a robot with an articulated arm (14) and a grasping device (2) of the said objects attached to that arm (14), including the following steps:
- approach and contact with the gripping device (2) to one of the objects (16, 16', 16');
- gripping the object (16, 16', 16') with the gripping device (2);
- movement of the gripping device (2) and the object (16, 16', 16');
- release of the object (16, 16', 16') by the gripping device (2);
**characterized by**
the robot complies with claim 5;
the approach to, and contact with, the object (16, 16', 16') includes fluid injection into the membrane-shaped enclosure (6) to make the membrane deformable; and
the object grab step (16, 16', 16') includes removing fluid from the enclosure to make the membrane rigid (6).

7. Process according to Claim 6, characterized as the approach to, and contact with, the object (16:16") includes a contact between the suction cup (10) and the object (16:16'), the object having a flat general surface area greater than that of the suction cup (10); and
the grasping stage of the object also includes the formation of vacuum between the suction cup (10) and the object (16, 16').
